# FASCICULE DE BREVET EUROPEEN

(11) **EP 0 959 105 B1**
(45) Date de publication et mention de la délivrance du brevet: **04.07.2007**
(21) Numéro de dépôt: 99401179.9
(22) Date de dépôt: 14.05.1999
(51) Int. Cl.: C08L 95/00, E01C 23/06, E01C 19/10

(54) **Enrobé bitumineux à base de fraisats de recyclage de matériaux de chaussées, son utilisation dans l'industrie routière**
Bituminöses Mischgut basierend auf gemahlenem wiederverwendetem Strassenbaumaterial sowie seine Verwendung im Strassenbau
Bituminous aggregate based on milled recycled road materials, its use in road construction

(30) Priorité: 20.05.1998 FR 9806358
(43) Date de publication de la demande: 24.11.1999
(73) Titulaire: TotalFinaElf France, 92800 Puteaux (FR)
(72) Inventeur: Malot, Michel, 76210 Bolbec (FR); Jolivet, Yannick, 76600 Le Havre (FR)
(74) Mandataire: Jolly, Jean-Pierre

(56) Documents cités:
- EP-A- 0 760 386
- FR-A- 2 589 853

## Description

La présente invention se rapporte au recyclage de matériaux de chaussées tels que des revêtements de chaussée vieillis, constitués par des granulats enrobés par un liant bitumineux, se présentant sous la forme de fraisats bitumineux, et réutilisés comme enrobés bitumineux dans l'industrie routière.

De façon usuelle, les chaussées bitumineuses sont des structures composites constituées par des granulats enrobés par un liant bitumineux, sur une épaisseur de quelques centimètres. Au bout d'un certain temps, ces revêtements subissent toutefois un vieillissement dû aux contraintes générées par le trafic et aux conditions climatiques, ce qui provoque un durcissement du liant, l'apparition de fissurations et/ou le phénomène d'orniérage.

Il faut donc prévoir un traitement de la chaussée pour remédier à ces dégradations.

Pour cela, différents procédés de recyclage ont été mis en oeuvre, utilisant notamment des techniques consistant à fraiser le revêtement existant avec une machine, pour obtenir un matériau appelé "fraisat", qui est ensuite mélangé avec un liant bitumineux de régénération, selon un procédé à froid ou à chaud.

Le recyclage traditionnel des matériaux de chaussée, qui a fait l'objet de nombreux travaux depuis plusieurs années, fait appel à une large gamme de techniques adaptées notamment aux enrobés bitumineux. Ces divers procédés, développés par les entreprises routières et maintenant bien maîtrisés, utilisent des équipements spécifiques pour le recyclage en centrale ou directement en place et, pour les matériaux bitumineux, le principe utilisé repose sur la notion de régénération du bitume présent dans la couche à retraiter et sur la correction de la courbe granulométrique par apport de granulats neufs et éventuellement de fines.

Au niveau du liant bitumineux, le but est de régénérer l'ancien bitume, dont le durcissement provient de la volatilisation de ses parties les plus légères, par correction de sa constitution chimique au moyen d'un liant adapté, pour obtenir un liant final présentant les caractéristiques d'un bitume classique. A cet effet, les sociétés pétrolières ont mis sur le marché des liants de recyclage, ayant un caractère aromatique et des teneurs faibles en asphaltènes.

Ces procédés font appel à des techniques à chaud ou à froid.

Un tel procédé de régénération à froid est notamment décrit dans le brevet européen EP-0 286 531, qui enseigne l'utilisation d'un liant de régénération constitué par un bitume à pénétrabilité élevée et à teneur forte en composés aromatiques, ce liant contenant environ 10 % d'un solvant essentiellement aromatique, dont les caractéristiques et la teneur de mise en oeuvre sont déterminées en fonction des caractéristiques de l'enrobé vieilli, notamment la nature des granulats ainsi que la teneur et les caractéristiques du liant initial.

Il est en outre connu, par la demande de brevet européen EP-0 810 276, d'utiliser un procédé de recyclage de bitume, qui consiste à désintégrer de l'asphalte vieilli en particules inférieures à 5 mm, à séparer ces particules en au moins deux fractions et à les chauffer séparément, avant de les mélanger avec du bitume neuf, par exemple sous forme d'émulsion.

Des développements plus récents ont essayé de résoudre partiellement ces problèmes, en utilisant des retraitements in situ à froid des fraisats, soit avec du ciment, soit en associant ciment et émulsion de bitume, sans toutefois obtenir pour certains des modules de rigidité importants.

C'est le cas, notamment, de la demande de brevet allemand DE-3 729 507, relative à un procédé de recyclage de bitume de route, par mélange des granulats obtenus par désintégration de la couche de surface avec une émulsion aqueuse de bitume dans laquelle est incorporé de 1 à 5 % en poids d'un liant hydraulique tel que du ciment, afin d'améliorer la résistance mécanique du matériau.

Cependant, ces procédés ne permettent pas de s'affranchir de la contrainte technique majeure, qui est la nécessité de disposer de fraisats homogènes, tant du point de vue granulométrique et composition qu'en ce qui concerne les caractéristiques des liants vieillis, dont la régénération doit être obtenue par mélange avec un liant neuf.

Or ceci constitue un handicap important pour la gestion de la collecte, du tri et du stockage des matériaux à recycler, qui réduit sensiblement l'intérêt économique de ces procédés classiques de recyclage et a limité le développement du recyclage en France.

La demande FR 2 589 853 décrit la préparation d'enrobés à chaud à partir de matériaux de recyclage de matériaux de chaussée, de granulats neufs et de bitumes de faible dureté ayant des pénétrabilités supérieures à 60 dixièmes de millimètres. Le matériau de recyclage est mis sous forme de sable fillérisé au prix d'un broyage poussé, économiquement peu intéressant.

La présente invention vise à proposer un procédé permettant de s'affranchir des inconvénients précités.

De façon surprenante, selon la présente invention, il a est proposé d'abandonner la notion de régénération du bitume vieilli contenu dans les fraisats, et de considérer ceux-ci comme de simples granulats à stabiliser par mélange avec un liant bitumineux de grade dur.

A cet effet, la présente invention a pour premier objet un enrobé bitumineux à base de fraisats de recyclage de matériaux de chaussée, caractérisé en ce qu'il comprend en mélange, un matériau minéral constitué de granulats neufs et de fraisats de recyclage de matériaux de chaussées, les fraisats étant de granulométrie 0/10 ou 0/14, ou 98% des particules passent au tamis de mailles de 10 ou 14 mm, la quantité de fraisats étant comprise entre 1 et 70 % du poids total de matériau minéral incorporé, et un liant bitumineux de grade dur ayant une pénétrabilité à 25 °C comprise entre 10 et 30 dixièmes de mm, et en ce qu'il présente un module de rigidité E*, mesuré à 15 °C et à 10 Hz, compris entre 9.10³ et 15.10³ MPa.

Ces valeurs situent le niveau de performance de cet enrobé au-dessus de celui d'une grave bitume (en abrégé, GB), telle que définie par la norme NF P 98-138 (E* ≥ 9.10³ MPa) et sensiblement à un niveau proche d'un enrobé à module élevé (en abrégé, EME), tel que défini selon la norme NF P 98-140 (E* ≥ 14.10³ MPa).

Selon un mode de réalisation avantageux, l'enrobé contient environ 70 % en poids de fraisats, par rapport au poids total de matériau minéral.

Le liant bitumineux de grade dur a une pénétrabilité à 25 °C comprise entre 10 et 30 dixièmes de mm, et la teneur en liant bitumineux de grade dur est de préférence comprise entre 2,5 et 6 % en poids, par rapport au poids total de matériau minéral incorporé.

En outre, cet enrobé présente une profondeur d'ornière inférieure à 5 mm à 30 000 cycles et à 60 °C (essai selon la norme NF P 98-253-1) et une compacité PCG à 100 girations supérieures à 95 % (essai de compactage à la presse à cisaillement giratoire PCG, selon la norme NF P 98-252), ainsi qu'un comportement en fatigue en flexion alternée à 10°C et 25 Hz, se traduisant par une valeur de déformation relative ε₆ supérieure ou égale à 110.10⁻⁶ (essai selon la norme NF P 98-261-1).

Un deuxième objet de l'invention concerne un procédé de recyclage de matériau de chaussées sous forme de fraisats bitumineux comme enrobés bitumineux dans l'industrie routière, présentant un module de rigidité E*, mesuré à 15 °C et à 10 Hz, compris entre 9.10³ et 15.10³ MPa, comprenant le mélange d'un matériau minéral constitué de granulats neufs et de fraisats de recyclage de matériaux de chaussées, les fraisats étant de granulométrie 0/10 ou 0/14, ou 98% des particules passent au tamis de mailles de 10 ou 14 mm, la quantité de fraisats étant comprise entre 1 et 70 % du poids total de matériau minéral incorporé, et d'un liant bitumineux de grade dur ayant une pénétrabilité à 25 °C comprise entre 10 et 30 dixièmes de mm.

Le procédé conforme à l'invention permet l'obtention d'une matrice de comportement visco-élastique, du fait de l'enrobage des fraisats par un bitume dur, assurant ainsi la cohésion du nouveau matériau obtenu, sans qu'il y ait régénération du liant vieilli.

Un avantage important du procédé selon l'invention est donc de pouvoir recycler des types de fraisats non homogènes, de provenances diverses, sans nécessité de les trier au préalable.

De façon avantageuse, la teneur en liant bitumineux de grade dur est comprise entre 2,5 et 6 % en poids, par rapport au poids total de matériau minéral. Plus particulièrement, la teneur en liant bitumineux de grade dur peut être de 3,5 % en poids.

Selon une caractéristique avantageuse de l'invention, la teneur globale en liant est comprise entre 5 et 10 % en poids par rapport au poids total de matériau minéral.

Le procédé de l'invention comporte au préalable une étape de concassage et criblage des fraisats, pour obtenir une granulométrie 0/10 ou 0/14 (98 % des particules passant au tamis de mailles de 10 ou 14 mm), et une étape d'apport de granulats neufs au taux minimum de 30 % en poids du total de matériau minéral, pour élaborer une courbe granulométrique de type d'un enrobé à module élevé (EME), tel que défini par la norme NF P 98-140.

De plus, l'étape d'enrobage est réalisée à une température d'au moins 180 °C, avec un temps de mélange supérieur d'environ 30 % à celui d'un enrobage classique.

De préférence, les fraisats bitumineux ont une teneur en liant vieilli d'au moins 3 % en poids, par rapport aux granulats.

Un autre objet de l'invention concerne l'utilisation de l'enrobé bitumineux décrit ci-dessus ou obtenu par le procédé décrit ci-dessus, dans l'industrie routière, pour la réalisation de couches d'assises de chaussées ou de couches de liaison.

Les essais rapportés ci-après, qui n'ont pas de caractère limitatif, ont été effectués en laboratoire sur des mélanges de fraisats, de granulats neufs et de bitume dur, selon la voie de l'enrobage à chaud, et sur leur évaluation mécanique comparativement à un enrobé à module élevé EME classique, ainsi qu'à une grave bitume, et ils sont destinés à illustrer la mise en oeuvre de l'invention et les avantages de celle-ci.

### Exemple 1

### Formulation d'un enrobé E, selon l'invention.

Les fraisats bitumineux utilisés pour les essais effectués ont une granulométrie 0/14 (98 % de particules passant au tamis de maille 14 mm) et une teneur en liant, ayant une pénétrabilité à 25 °C de 20 1/10 mm, de 4,1 %. en poids.

Pour obtenir un matériau bitumineux compatible avec une utilisation routière, c'est-à-dire résistant à l'orniérage, à la fatigue mécanique et aux cycles thermiques, la composition pondérale suivante a été choisie :
- fraisats 70 %
- granulats: 0/10, type Meilleraie 30 %
- liant: bitume Viatotal 10/20
(produit par TOTAL ; pénétrabilité à 25°C, entre 10 et 20 1/10mm) 3,5 ppc (partie pour cent en poids)

Le mélange est fait dans un malaxeur à une température de 180 °C, après réchauffage des fraisats à cette température.

Un premier essai de compactage à la presse à cisaillement giratoire (PCG), effectué selon la norme NF P 98-252, a donné un taux de compacité de 98,5 % à 100 girations, alors que, pour un enrobé à module élevé (EME) de classe 2, tel que défini selon la norme NF P 98-140, ce taux doit être supérieur ou égal à 94 %, et que, pour une grave bitume (GB) de classe 3, telle que définie par la norme NF P 98-138 et de granulométrie 0/14, le taux doit être supérieur ou égal à 90 %. Ce résultat illustre une bonne capacité de résistance en fatigue de l'enrobé selon l'invention.

Un essai d'orniérage, selon la norme NF P 98-253-1, réalisé à 60 °C et à 30 000 cycles, donne une valeur d'ornière moyenne de 0,9 % par rapport à l'épaisseur de l'éprouvette (10 cm), soit 0,9 mm, alors que cette valeur doit être inférieure ou égale à 8 % pour un enrobé à module élevé (EME) et se situe en général entre 4 et 5 %, et être inférieure ou égale à 10 % pour une grave bitume (GB). Ceci dénote un bon comportement à chaud de l'enrobé selon l'invention.

Une évaluation comparative des performances mécaniques avec un enrobé à module élevé classique (EME), ainsi qu'avec une grave bitume (GB), a été réalisée en faisant :
- des essais de résistance à la compression et à la traction indirecte, selon la théorie de Mohr-Coulomb,
- des essais de mesure du module de rigidité, selon la méthode interne TOTAL 762/95, .
- des essais de détermination de la résistance en fatigue, selon la norme NF P 98-261-1.

### A) Essais de résistance en compression et de traction indirecte

A partir des cercles de compression et de traction et de la forme de leur enveloppe, la théorie de Mohr-Coulomb appliquée aux matériaux granulaires permet d'avoir des informations sur le type de rupture, sur la cohésion, la fragilité, et la résistance au cisaillement.

Si R est la résistance à la compression, r la résistance à la traction indirecte, selon cette théorie et l'analyse géométrique des cercles, il est connu que:
- la cohésion C = 1/2 (Rr)^{0,5}
- l'angle de frottement interne ϕ est défini par la relation Sin ϕ =R-r/R+r (lorsque ϕ = π/2, cela traduit un comportement purement élastique du matériau, et lorsque ϕ = 0, un comportement purement visqueux)
- la résistance au cisaillement σ = R.r/R+r .

Des essais comparatifs entre l'enrobé selon l'invention (E1), dont la composition a été décrite ci-dessus, et un enrobé dit EME, ayant une granularité 0/14, de type défini par la norme NF P 98-140 et contenant la même teneur (3,5 ppc) de liant Viatotal 10/20, ont été réalisés sur éprouvettes Duriez, à 18 °C. Les résultats obtenus, qui sont regroupés dans le Tableau ci-après, montrent des caractéristiques très proches, notamment pour la cohésion et la résistance au cisaillement, qui laissent présager, pour l'enrobé selon l'invention, des performances de résistance aux sollicitations du trafic routier à moyenne et basse température, au moins équivalentes à celles d'un EME.

**Tableau**

| Référence | Compacité | R | r | ϕ | Cohésion | σ |
|---|---|---|---|---|---|---|
| | (%) | (MPa) | (MPa) | (°) | (MPa) | (MPa) |
| E1 | 97,3 | 16,3 | 2,4 | 48 | 3,1 | 2,09 |
| EME | 96 | 11,4 | 2,7 | 48 | 3,1 | 2,18 |

### B) Mesure du module dynamique de rigidité

On utilise une méthode d'essai interne TOTAL 762/95 de traction-compression à déformation imposée sur une éprouvette cylindrique soumise à un chargement sinusoïdal (sur appareil Inströn), pour la détermination de la valeur du module dynamique E*, issue du module complexe E*.

A une température de 15 °C et une fréquence de 10 Hz, le module de rigidité E* est de 12 500 MPa, valeur comprise entre celle d'une GB, dont E* est supérieur ou égal à 9 000 MPa, et celle d'un EME, dont E* est supérieur ou égal à 14 000 MPa.

La valeur du module dynamique est utilisée dans les calculs de dimensionnement des chaussées et, plus celle-ci est élevée, plus l'épaisseur de la chaussée peut être réduite.

On peut évaluer ainsi que le gain d'épaisseur, pour une couche d'assise de chaussée réalisée avec l'enrobé selon l'invention, par rapport à une grave bitume de classe 3 (GB), se situe entre 10 et 40 %.

### C) Evaluation de la résistance en fatigue

La méthode utilisée, selon la norme NF P 98-261-1, est fondée sur la sollicitation par flexion sinusoïdale à flèche constante d'éprouvettes consoles trapézoïdales. Chaque éprouvette est sollicitée par un train d'ondes sinusoïdales continues d'amplitude donnée jusqu'à rupture conventionnelle. Plusieurs amplitudes de flèche sont nécessaires pour déterminer la pente de la droite de fatigue, qui est établie à partir des résultats représentant les durées de vie N (ou nombre de cycles) pour les niveaux de déformation choisis, en faisant une régression linéaire du type ln N = A₀ + A₁.ln ε, où ln désigne le logarithme népérien, qui permet de calculer la valeur de la déformation relative correspondant en moyenne à 10⁶ cycles de sollicitations, ε₆. Plus cette valeur est élevée, plus le produit résiste à la fatigue.

Pour des essais réalisés à une température de 10 °C et une fréquence de 25 Hz, ε₆ = 142.10⁻⁶, alors que pour un EME et une GB, cette valeur doit être respectivement supérieure ou égale à 130.10⁻⁶ et supérieure ou égale à 110.10⁻⁶.

Ces valeurs montrent clairement que l'enrobé bitumineux selon l'invention présente un comportement en fatigue nettement amélioré, par rapport à celui d'une GB, et même légèrement supérieur, par rapport à celui d'un EME.

### Exemple 2

Une seconde formulation d'enrobés conforme à l'invention a été testée. Cette formulation avait la composition pondérale suivante :
- fraisats : 30 %,
- granulats (O/10, type Meilleraie) : 70 %,
- liant (bitume Viatotal 10/20) : 4,0 ppc (parties pour cent en poids).

La mesure du module dynamique de rigidité (selon la méthode TOTAL 762/95), à une température de 15°C et une fréquence de 10 Hz, donne une valeur de 13 940 MPa, valeur qui reste comprise entre celle d'une grave-bitume et celle d'un EME (entre 9.10³ et 15.10³ MPa).

En conclusion, au vu des résultats d'essais effectués sur l'enrobé selon l'invention, incorporant des fraisats bitumineux, les performances de ce matériau permettent de l'utiliser de façon satisfaisante dans les couches d'assise de chaussées et/ou dans les couches de liaison, tout en réduisant les contraintes du recyclage classique et en favorisant donc le recyclage en quantités notables des fraisats bitumineux.

Il peut aussi être envisagé l'extension de ce procédé de recyclage à d'autres déchets routiers, notamment aux matériaux traités aux liants hydrauliques, comme les bétons ou les graves ciment.

## Revendications

1. Enrobé bitumineux à base de fraisats de recyclage de matériaux de chaussée, **caractérisé en ce qu'**il comprend, en mélange,
• un matériau minéral constitué de granulats neufs et de fraisats de recyclage de matériaux de chaussées, les fraisats étant de granulométrie 0/10 ou 0/14, où 98% des particules passent au tamis de mailles de 10 ou 14 mm, la quantité de fraisats étant comprise entre 1 et 70 % du poids total de matériau minéral incorporé, et
• un liant bitumineux de grade dur ayant une pénétrabilité à 25°C comprise entre 10 et 30 dixièmes de mm,
et **en ce qu'**il présente un module de rigidité E*, mesuré à 15 °C et à 10 Hz, compris entre 9.10³ et 15.10³ MPa.

2. Enrobé bitumineux selon la revendication 1, **caractérisé en ce que** le matériau minéral comprend entre 30 et 70 % en poids de fraisats.

3. Enrobé bitumineux selon la revendication 1, **caractérisé en ce que** le matériau minéral comprend 70 % en poids de fraisats.

4. Enrobé bitumineux selon la revendication 1, **caractérisé en ce que** la teneur en liant bitumineux de grade dur ayant une pénétrabilité à 25 °C comprise entre 10 et 30 dixièmes de mm, est comprise entre 2,5 et 6 % en poids, par rapport au poids total du matériau minéral.

5. Enrobé bitumineux selon l'une des revendications 1 à 4, **caractérisé en ce qu'**il présente une profondeur d'ornière inférieure à 5 mm, mesurée à 30 000 cycles et 60°C, selon la norme NF P 98-253-1, ainsi qu'une compacité PCG à 100 girations supérieure à 95 %, selon la norme NF P 98-252.

6. Enrobé bitumineux selon l'une des revendications précédentes, **caractérisé en ce qu'**il présente un comportement en fatigue en flexion alternée, à 10 °C et à 25 Hz, se traduisant par une valeur de déformation relative ε₆ supérieure ou égale à 110.10⁻⁶.

7. Procédé de recyclage de matériaux de chaussées sous forme de fraisats bitumineux, comme enrobés bitumineux dans l'industrie routière présentant un module de rigidité E*, mesuré à 15 °C et à 10 Hz, compris entre 9.10³ et 15.10³ MPa, comprenant le mélange
• d'un matériau minéral constitué de granulats neufs et de fraisats de recyclage de matériaux de chaussées, les fraisats étant de granulométrie 0/10 ou 0/14, où 98% des particules passent au tamis de mailles de 10 ou 14 mm, la quantité de fraisats de recyclage de matériaux de chaussées étant comprise entre 1 et 70 % du poids total de matériau incorporé, et
• d'un liant bitumineux de grade dur ayant une pénétrabilité à 25°C comprise entre 10 et 30 dixièmes de mm.

8. Procédé selon la revendication 7, **caractérisé en ce que** la teneur en liant bitumineux de grade dur ayant une pénétrabilité à 25°C comprise entre 10 et 30 dixièmes de mm, est comprise entre 2,5 et 6 % en poids, par rapport au poids total du matériau minéral.

9. Procédé selon la revendication 8, **caractérisé en ce que** la teneur en liant bitumineux de grade dur ayant une pénétrabilité à 25°C comprise entre 10 et 30 dixièmes de mm, est de 3,5 % en poids par rapport au poids total du matériau minéral.

10. Procédé selon l'une des revendications 7 à 9, **caractérisé en ce que** la teneur globale en liant est comprise entre 5 et 10 % en poids par rapport au poids total du matériau minéral.

11. Procédé selon l'une des revendications 7 à 10, **caractérisé en ce qu'**il comporte en outre une étape préliminaire de concassage et criblage des fraisats, pour obtenir une granulométrie 0/10 ou 0/ 14 où 98 % des particules passent respectivement au tamis de mailles de 10 ou 14 mm.

12. Procédé selon l'une des revendications 7 à 11, **caractérisé en ce que** l'étape d'enrobage est réalisée à une température d'au moins 180 °C, avec un temps de mélange supérieur d'environ 30 % à celui d'un enrobage classique.

13. Utilisation de l'enrobé bitumineux selon l'une des revendications 1 à 6, ou obtenu par le procédé selon l'une des revendications 7 à 12, dans l'industrie routière, pour la réalisation de couches d'assises de chaussées ou de couches de liaison.

## Claims

1. A bituminous paving mix based on recycled paving material mill, **characterised in that** it comprises, in a mixture
• a mineral material consisting of new granular material and recycled paving material mill, the mill having a grain size of 0/10 or 0/14, in which 98 % of the particles pass through a 10 or 14 mm mesh screen, the quantity of mill being between 1 and 70 % of the total weight of mineral material incorporated, and
• a hard grade bituminous binder having a penetrability at 25 °C of between 10 and 30 tenths of a mm,
and **in that** it has a rigidity modulus E*, measured at 15 °C and at 10 Hz, of between 9·10³ and 15·10³ MPa.

2. A bituminous paving mix according to claim 1, **characterised in that** the mineral material comprises between 30 and 70 % by weight of mill.

3. A bituminous paving mix according to claim 1, **characterised in that** the mineral material comprises 70 % by weight of mill.

4. A bituminous paving mix according to claim 1, **characterised in that** the content of hard grade bituminous binder having a penetrability at 25 °C of between 10 and 30 tenths of a mm is between 2.5 and 6 % by weight, relative to the total weight of the mineral material.

5. A bituminous paving mix according to one of claims 1 to 4, **characterised in that** it has a rut depth of less than 5 mm, measured after 30,000 cycles and at 60 °C, to standard NF P 98-253-1, and a gyratory shear press density after 100 gyrations of greater than 95 %, to standard NF P 99-252.

6. A bituminous paving mix according to one of the preceding claims, **characterised in that** it exhibits constant strain flexural fatigue behaviour, at 10 °C and 25 Hz, which may be expressed as a relative deformation value ε₆ greater than or equal to 110·10⁻⁶

7. A method of recycling paving materials in the form of bituminous mill, as bituminous paving mixes in the road construction industry having a rigidity modulus E*, measured at 15 °C and at 10 Hz, of between 9·10³ and 15·10³ MPa, comprising mixing
• a mineral material consisting of new granular material and recycled paving material mill, the mill having a grain size of 0/10 or 0/14, in which 98 % of the particles pass through a 10 or 14 mm mesh screen, the quantity of recycled paving material mill being between 1 and 70 % of the total weight of mineral material incorporated, and
• a hard grade bituminous binder having a penetrability at 25°C of between 10 and 30 tenths of a mm.

8. A method according to claim 7, **characterised in that** the content of hard grade bituminous binder having a penetrability at 25 °C of between 10 and 30 tenths of a mm is between 2.5 and 6 % by weight relative to the total weight of the mineral material.

9. A method according to claim 8, **characterised in that** the content of hard grade bituminous binder having a penetrability at 25 °C of between 10 and 30 tenths of a mm is 3.5 % by weight relative to the total weight of the mineral material.

10. A method according to one of claims 7 to 9, **characterised in that** the total binder content is between 5 and 10 % by weight relative to the total weight of the mineral material.

11. A method according to one of claims 7 to 10, **characterised in that** it further comprises a preliminary mill crushing and sifting stage, for obtaining a grain size of 0/10 or 0/14, in which 98 % of the particles pass respectively through a 10 or 14 mm mesh screen.

12. A method according to one of claims 7 to 11, **characterised in that** the coating mixing stage is performed at a temperature of at least 180 °C, with a mixing time greater by approximately 30 % than that of conventional coating mixing.

13. Use of the bituminous paving mix according to one of claims 1 to 6, or obtained by the method according to one of claims 7 to 12, in the road construction industry, to produce pavement bedding courses or binder courses.

## Patentansprüche

1. Butiminöses Mischgut auf Basis eines Straßenbaumaterial-Recyclingfräsguts, **dadurch gekennzeichnet, dass** es in Mischung umfasst:
• ein aus neuem Granulat und Straßenbaumaterial-Recyclingfräsgut zusammengesetztes mineralisches Material, wobei das Fräsgut eine Kornklassierung 0/10 oder 0/14 aufweist, wobei 98% der Teilchen ein Sieb mit Maschenweite 10 oder 14 mm passieren, wobei die Menge an Fräsgut 1 bis 70 Gew.-% des gesamten eingeschlossenen mineralischen Materials beträgt, und
• ein butuminöses Bindemittel harter Qualität, das eine Durchdringbarkeit bei 25°C von 10 bis 30 Zehntel mm aufweist,
und dass es ein Steifigkeitsmodul E*, gemessen bei 15°C und bei 10Hz, von 9x10³ bis 15x10³ MPa zeigt.

2. Bituminöses Mischgut gemäß Anspruch 1, **dadurch gekennzeichnet, dass** das mineralische Material 30 bis 70 Gew.-% Fräsgut umfasst.

3. Bituminöses Mischgut gemäß Anspruch 1, **dadurch gekennzeichnet, dass** das mineralische Material 70 Gew.-% Fräsgut umfasst.

4. Bituminöses Mischgut gemäß Anspruch 1, **dadurch gekennzeichnet, dass** der Gehalt an bituminösem Bindemittel harter Qualität mit einer Durchdringbarkeit bei 25°C von 10 bis 30 Zehntel mm 2,5 bis 6 Gew.-% im Verhältnis zum Gesamtgewicht des mineralischen Materials beträgt.

5. Bituminöses Mischgut gemäß einem der Ansprüche 1 bis 4, **dadurch gekennzeichnet, dass** es eine Spurtiefe von weniger als 5 mm, gemessen bei 30.000 Zyklen und 60°C gemäß der Norm NF P 98-253-1, sowie eine Kompaktheit PCG bei 100 Rotationen von mehr als 95% gemäß der Norm NF P 98-252 zeigt.

6. Bituminöses Mischgut gemäß einem der vorangehenden Ansprüche, **dadurch gekennzeichnet, dass** es ein Ermüdungsverhalten bei alternierender Biegung bei 10°C und 25 Hz zeigt, das sich in einem relativen Deformierwert ε₆ von größer oder gleich 110x10⁻⁶ äußert.

7. Verfahren zum Recycling von Straßenbaumaterial in Form von bituminösem Fräsgut als bituminöses Mischgut im Straßenbau, das ein Steifigkeitsmodul E*, gemessen bei 15°C und 10 Hz, von 9x10³ bis 15x10³ MPa zeigt, umfassend die Vermengung
• eines mineralischen Materials, das aus neuem Granulat und Straßenbaumaterial-Recyclingfräsgut zusammengesetzt ist, wobei das Fräsgut eine Kornklassierung von 0/10 oder 0/14 aufweist, wobei 98% der Teilchen ein Sieb mit Maschenweite von 10 oder 14 mm passieren, wobei die Menge an Straßenbaumaterial-Recyclingfräsgut 10 bis 70 Gew.-% des gesamten eingebauten Materials umfasst, und
• eines bituminösen Bindemittels harter Qualität, das eine Durchdringbarkeit bei 25°C von 10 bis 30 Zehntel mm aufweist.

8. Verfahren gemäß Anspruch 7, **dadurch gekennzeichnet, dass** der Gehalt an bituminösem Bindemittel harter Qualität mit einer Durchdringbarkeit bei 25°C von 10 bis 30 Zehntel mm 2,5 bis 6 Gew.-% im Verhältnis zum Gesamtgewicht des mineralischen Materials beträgt.

9. Verfahren gemäß Anspruch 8, **dadurch gekennzeichnet, dass** der Gehalt an bituminösem Bindemittel harter Qualität mit einer Durchdringbarkeit bei 25°C von 10 bis 30 Zehntel mm 3,5 Gew.-% im Verhältnis zum Gesamtgewicht des mineralischen Materials beträgt.

10. Verfahren gemäß einem der Ansprüche 7 bis 9, **dadurch gekennzeichnet, dass** der Gesamtgehalt an Bindemittel 5 bis 10 Gew.-% im Verhältnis zum Gesamtgewicht des mineralischen Materials beträgt.

11. Verfahren gemäß einem der Ansprüche 7 bis 10, **dadurch gekennzeichnet, dass** es ferner eine Vorstufe der Zerkleinerung und Siebung des Fräsguts umfasst, um eine Kornklassierung von 0/10 oder 0/14 zu erhalten, wobei 98% der Teilchen ein Sieb der Maschenweite von jeweils 10 oder 14 mm passieren.

12. Verfahren gemäß einem der Ansprüche 7 bis 11, **dadurch gekennzeichnet, dass** die Stufe der Belagbildung bei einer Temperatur von mindestens 180°C mit einer Mischungszeit von mehr als ungefähr 30% derjenigen eines herkömmlichen Belags durchgeführt wird.

13. Verwendung des bituminösen Mischguts gemäß einem der Ansprüche 1 bis 6 oder wie durch das Verfahren gemäß einem der Ansprüche 7 bis 12 erhalten beim Straßenbau, zum Herstellen von sitzenden Straßenschichten oder von verbindenden Schichten.
